# EUROPÄISCHE PATENTSCHRIFT

(11) **EP 3 507 035 B1**
(45) Veröffentlichungstag und Bekanntmachung des Hinweises auf die Patenterteilung: **23.09.2020**
(21) Anmeldenummer: 17780981.1
(22) Anmeldetag: 30.08.2017
(51) Int. Cl.: B21D 5/00, B21D 5/02, B21D 55/00

(54) **BIEGEMASCHINE MIT EINER ARBEITSBEREICH-BILDERFASSUNGSVORRICHTUNG UND VERFAHREN ZUR DARSTELLUNG EINES ARBEITSBEREICHS**
BENDING MACHINE COMPRISING A WORK AREA IMAGE DETECTING DEVICE AND METHOD FOR REPRESENTING A WORK AREA
MACHINE À CINTRER DOTÉE D'UN DISPOSITIF DE DÉTECTION D'IMAGE DE ZONE DE TRAVAIL ET PROCÉDÉ DE REPRÉSENTATION D'UNE ZONE DE TRAVAIL

(30) Priorität: 02.09.2016 AT 507832016
(43) Veröffentlichungstag der Anmeldung: 10.07.2019
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); STEININGER, Verena, 4020 Linz (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2017/060211
(87) Internationale Veröffentlichungsnummer: WO 2018/039695

(56) Entgegenhaltungen:
- WO-A1-03/035294
- AT-A1- 511 557
- JP-A- 2004 202 506
- JP-A- 2005 021 978

## Beschreibung

Die Erfindung betrifft eine Biegemaschine mit einer Arbeitsbereich-Bilderfassungsvorrichtung.

Der Arbeits- bzw. Sichtbereich eines Maschinenbedieners einer Biegemaschine, im Speziellen einer Freibiegemaschine, wird konstruktionsbedingt vom Maschinentisch und vor allem vom Pressbalken dominiert. Insbesondere schränkt der Pressbalken, mit den darin angeordneten Biegewerkzeugen, den Blick in das Maschineninnere, wo sich die Hinteranschlagsvorrichtung mit den Anschlagfingern befindet, zumeist stark ein. Ferner ist es üblich, am Pressbalken mehrere unterschiedliche Arten von Biegewerkzeugen anzuordnen, um somit längs des Pressbalkens unterschiedliche Biegeumformungen durchführen zu können. Dazu muss der Maschinenbediener das umzuformende Werkstück in der richtigen Reihenfolge und jeweils korrekt ausgerichtet, den Biegewerkzeugen zuführen.

Wird eine Biegemaschine zur Serienproduktion einer größeren Stückzahl gleich zu bearbeitender Werkstücke verwendet, ist der Maschinenbediener mit den einzelnen Arbeitsschritten bereits gut vertraut und wird somit die Bedienhandlungen, insbesondere das korrekt ausgerichtete Zuführen des Werkstücks, zuverlässig ausführen. Bei kleineren in Serie zu fertigenden Stückzahlen, insbesondere bei einer Stückzahl die gegen eins geht, fehlt einem Maschinenbediener die nötige Routine, was die Gefahr birgt, dass insbesondere bei komplexen Biegeteilen, ein Werkstück fehlerhaft gebogen wird. Da ein Maschinenbediener teilweise beinahe gleichzeitig, verschiedenste Aktionen koordinieren und überwachen muss, insbesondere eine korrekte Ausrichtung an der richtigen Biegestation und ein korrektes Anliegen des Werkstücks am Hinteranschlag, wird dadurch ein unnötiger hoher Stresspegel hervorgerufen. Da insbesondere der Hinteranschlag aufgrund konstruktiver Gegebenheiten der Biegemaschine zumeist nicht direkt einsehbar ist, muss sich der Maschinenbediener bücken, um beim Einlegen des Werkstücks das Anliegen am Hinteranschlag prüfen zu können, was neben einer körperlichen Mehrbelastung, aufgrund der scharfkantigen metallischen Blechteile ein Verletzungsrisiko birgt.

Vom Maschinenbediener werden bei der bestimmungsgemäßen Bedienung einer Biegemaschine Kontroll- und Überwachungsaufgaben gefordert, die eine weitestgehend zeitgleiche Aufmerksamkeit an teilweise räumlich weit voneinander distanzierten Orten erforderlich macht. Gleichzeitig ist es erforderlich, dass teilweise komplexe Ausrichtvorgänge des umzuformenden Werkstücks beachtet werden.

Beispielsweise offenbart die EP 2 590 040 B1 eine Biegemaschine, bei der am Pressbalken zwei Kameras angeordnet sind, welche den vorderen Arbeitsbereich der Biegemaschine erfassen, insbesondere ein eingelegtes umzuformendes Werkstück, und wobei nach Ermitteln der Ausrichtung des Werkstücks, von einem Projektor eine Ausrichtinformation auf das Werkstück projiziert wird. Die beiden Kameras sind dabei in den Endbereichen des Pressbalkens und vor dem Pressbalken angeordnet. Im Hinblick auf die optische Abbildungsqualität hat eine seitliche Anordnung der Kameras den Nachteil, dass der Abstand zwischen der Kamera und dem zu erfassenden Abschnitt groß ist, wodurch sich das relative Auflösungsvermögen der Kamera reduziert. Durch Verwendung von Teleoptiken ließe sich dieses Problem weitestgehend eliminieren, allerdings können dann Abschnitte in den Randbereichen der Biegemaschine nicht mehr erfasst werden. Zoom-Optiken sind aufgrund der erforderlichen Feinmechanik, im Hinblick auf die Lebensdauer und das Betriebsumfeld, kaum geeignet. Eine Anordnung von Elementen wie einer Kamera bzw. eines Projektors vor dem Pressbalken hat jedoch noch einen weiteren entscheidenden Nachteil, dass für derart angeordnete Objekte ein großes Beschädigungsrisiko besteht. Blechteile werden oftmals mittels eines Hallenkrans zur Biegemaschine zugeführt, was leicht zu Beschädigungen von vor dem Pressbalken angeordneten Vorrichtungen führen kann. Auch kann das sich aufbiegende Blech am Pressbalken anschlagen und dort angebrachte Vorrichtungen beschädigen.

Aus der DE 10 2008 014 869 A1 ist eine Plattenaufteilungsanlage bekannt, bei der ein längserstreckter Arbeitsbereich von einer Kamera erfasst wird und eine Auswerteinformation von einem Laserprojektor auf Werkstücke projiziert wird, die sich längs der Vorrichtung bewegen. Wie aus dem Dokument erkennbar, muss von der Kamera ein großer Bereich erfasst werden, was hohe Anforderungen an das optische System bzw. die Auflösung der Kamera stellt. Insbesondere sind hierzu Weitwinkelobjektive erforderlich, welche bekanntlicherweise deutliche Bildverzerrungen aufweisen, insbesondere in den Randbereichen. Die Kamera ist über dem Bearbeitungsweg angeordnet, da hier mit keinen Beeinträchtigungen durch Manipulations- bzw. Biegeumformungen zu rechnen ist.

Aus der JP 5856860 B2 ist eine Blech-Einleghilfe bekannt, bei der eine Kamera im Maschinenraum auf den Hinteranschlag und das eingelegte Blech gerichtet ist. Im erfassten Abbild wird eine Blechkante oder ein markanter Punkt des Bleches ermittelt und mit einer Sollposition verglichen. Bei einer Abweichung wird von einem Projektor eine Markierung auf das Blech projiziert, auf die das Blech in Bezug zum Hinteranschlag ausgerichtet werden muss. Die Kamera und der Projektor sind an einer Vorrichtung angebracht, welche parallel zum Pressbalken bewegbar ist. Aus dem Stand der Technik sind Vorrichtungen bekannt, bei denen Kameras derart an einer Biegemaschine angeordnet sind, dass aufgrund dieser Anordnung die optischen Gegebenheiten für die Kameras nachteilig sind. Insbesondere zeigt der Stand der Technik jedoch Anordnungspositionen, die sich im direkten Gefährdungsbereich vor einer Biegemaschine befinden.

Die WO 03/035294 A1 offenbart eine optische Sicherheitseinrichtung, welche zwei CCD-Kameras umfasst die jeweils unbeweglich seitlich an den Hydraulikzylindern der Biegemaschine angeordnet sind. Die optische Sicherheitseinrichtung kann gemäß unterschiedlicher Ausführungsformen dazu genutzt werden die Position eines Bedieners und/oder eines Körperteils des Bedieners vor der Anlage und/oder vor dem Bearbeitungsbereich zu detektieren.

Aus dem Stand der Technik ist jedoch nicht bekannt, den gesamten Arbeitsbereich einer Biegemaschine, insbesondere den Arbeitsbereich vor der Biegemaschine zu erfassen, wobei das Bilderfassungsmittel vor Beschädigungen aufgrund von Manipulationsarbeiten bei der Zustellung bzw. Entnahme des Werkstücks und vor Beschädigungen während des Biegevorgangs geschätzt angeordnet sein ist.

Die Aufgabe der Erfindung besteht also darin, den Arbeitsbereich einer Biegemaschine zu erfassen, wobei eine hohe Detailauflösung erreicht wird und gleichzeitig im bestimmungsgemäßen Betrieb, ein sehr guter Schutz der Bilderfassungsvorrichtungen gegeben ist, ohne den Arbeitsbereich der Biegemaschine einzuschränken.

Die Aufgabe der Erfindung wird gelöst durch eine Biegemaschine mit einer Arbeitsbereich-Bilderfassungsvorrichtung. Die Biegemaschine weist einen Maschinenrahmen, einen längserstreckten, feststehenden Maschinentisch und einen längserstreckten Pressbalken auf, wobei der Pressbalken im Maschinenrahmen geführt und von einem Antriebsmittel relativ zu diesem beweglich aufgenommen ist. Ferner weist der Maschinenrahmen zwei Seitenteile auf, welche in Richtung der Längserstreckung des Maschinentisches durch eine Maschinenbreite voneinander distanziert sind. Die Längserstreckung und die Bewegungsrichtung des Pressbalkens spannen eine Arbeitsebene auf, wobei die Arbeitsebene einen vorderen Arbeits- und Manipulationsraum und einen davon abgegrenzten, und insbesondere abgeschlossenen, hinteren Maschinenraum festlegt. Im Arbeits- und Manipulationsraum oberhalb des Maschinentisches, in einem Mittenabschnitt der Längserstreckung des Pressbalkens ist eine Bilderfassungsvorrichtung angeordnet, wobei ein Erfassungsbereich der Bilderfassungsvorrichtung in Richtung des Maschinentisches ausgerichtet ist. Die Bilderfassungsvorrichtung ist mit einem Anzeigemittel verbunden, welches zur Darstellung des erfassten Abbilds des Erfassungsbereichs ausgebildet ist. Die Bilderfassungsvorrichtung ist in einer Pressbalken-Verkleidung angeordnet und weist zwei Bilderfassungsmittel auf, wobei jedes Bilderfassungsmittel einen Teilabschnitt in Richtung des Maschinentisches erfasst.

Der besondere Vorteil dieser Ausführung liegt darin, dass einerseits die Bilderfassungsvorrichtung in einem Bereich vor der Maschine angeordnet ist, in dem die Gefahr einer Beschädigung durch Manipulationsarbeiten mit dem Werkstück bzw. durch den Biegevorgang weitestgehend reduziert ist. Andererseits ist in dieser Anordnungsposition eine gute Sicht auf den Arbeitsbereich gegeben, insbesondere auf den Maschinentisch, mit dem eingelegten umzuformenden Blech und/oder auf die eingesetzten Unterwerkzeuge, sowie auf die im Pressbalken eingesetzten Oberwerkzeuge. Diese freie Sicht schränkt insbesondere keineswegs den Blech-Manipulationsraum bzw. den nutzbaren Raum für das sich aufbiegende Blech ein.

Durch die Ausführung mit zwei Kameras wird ferner erreicht, dass damit auch Maschinetische mit einer großen Längserstreckung erfasst werden können.

Eine Weiterbildung besteht darin, dass das Bilderfassungsmittel durch eine 2D-Kamera gebildet ist, bspw. durch CCD-Kameras mit einer Auflösung von zumindest 3Mpx. Bevorzugt weist die Kamera eine Auflösung von 5Mpx auf. Somit können auch breite Biegemaschinen, mit einer Längserstreckung des Maschinentisches größer 1m, vom Erfassungsbereich abgedeckt und in ausreichend guter Ortsauflösung erfasst werden. Das erforderliche Auflösungsvermögen wird im Wesentlichen von der Ortsauflösung bestimmt, nach der ein Pixel einem realen Bereich mit einer Abmessung kleiner 1mm entsprechen muss.

Eine Weiterbildung besteht auch darin, dass das Bilderfassungsmittel durch einen Laser-Scanner gebildet ist. Im Gegensatz zu einer 2D-Kamera, welche den gesamten Bildbereich mit der kameraspezifischen Auflösung erfasst, kann mit einem Scanner der zu erfassende Bereich genau gewählt werden und kann insbesondere auch ein vom Rechteckformat abweichendes Format aufweisen. Ein eingelegtes Blech weist zumeist einen merkbaren Unterschied im Reflexionsgrad gegenüber der Umgebung auf. Daher kann mittels eines Scanvorgangs, der auf der Ermittlung eines Unterschieds in der Intensität des reflektierten Scan-Strahls basiert, sehr schnell auch die äußere Form des Bleches ermittelt werden. Auch lassen sich bspw. sequentiell mehrere Bereiche entlang der Längserstreckung erfassen, ggf. auch mit unterschiedlicher bzw. variierender Auflösung.

Eine Weiterbildung besteht darin, dass die beiden Teilabschnitte einen ersten Überlappungsbereich bilden, der einen gemeinsamen Abschnitt des Erfassungsbereichs abdeckt. Dieser Bereich ist bevorzugt im mittleren Bereich des Maschinentisches vorgesehen und gewährleistet, dass trotz der Zweiteilung des Erfassungsbereichs, der gesamte Erfassungsbereich durchgehend erfasst wird.

Eine Ausbildung besteht auch darin, dass das Verhältnis von Normalabstand zwischen der Bilderfassungsvorrichtung und der Längserstreckung des Maschinentisches kleiner 1 beträgt, insbesondere im Bereich von 1 bis 0.25. Aufgrund üblicher Ausführungsformen von Biegemaschinen und im Hinblick auf die Gewährleistung bzw. Erreichung des gegenständlichen Erfassungsbereichs, ist der Normalabstand zwischen Maschinentisch und Bilderfassungsvorrichtung limitiert. Gemäß der gegenständlichen Ausführung kann die Bilderfassungsvorrichtung auch für breite, insbesondere sehr breite (bis ca. 6m), Biegemaschinen verwendet werden.

Eine Weiterbildung besteht darin, dass der Normalabstand zwischen der Bilderfassungsvorrichtung und Maschinentisch 60cm bis 150cm beträgt. Im Hinblick auf eine gute Ortsauflösung der Bilderfassungsvorrichtung bzw. der einzelnen Bilderfassungsmittel ist diese Ausbildung von Vorteil, da dadurch die Anforderungen an das physikalische Auflösungsvermögen der einzelnen Bilderfassungsmittel reduziert sind. Insbesondere sind keine ultra-hochauflösenden Bilderfassungsmittel erforderlich. Dies gilt auch für die verwendeten Optiken - es wird mit Standard (consumer) Optiken das Auslangen gefunden.

Eine Weiterbildung besteht auch darin, dass die optischen Zentren der beiden Bilderfassungsmittel, im Vergleich zur Längserstreckung des Maschinentisches, übereinstimmen, insbesondere mit einer Distanz zueinander von weniger als 10cm angeordnet sind. Aufgrund mechanisch-konstruktiver Gegebenheiten ist eine übereinstimmende Anordnung der optischen Zentren beider Bilderfassungsmittel nur mit sehr aufwändigen Sonderlösungen machbar. Der Vorteil der anspruchsgemäßen Weiterbildung liegt nun insbesondere darin, dass mit einfachen Standardkomponenten, die Bilderfassung des gesamten Erfassungsbereichs möglich ist. Im Vergleich zur Längserstreckung des Erfassungsbereichs, welche im Meter-Bereich liegt, bspw. 1-6m, kann eine Anordnung in einem Abstand von 10cm als übereinstimmende Anordnung angesehen werden. Die sich daraus ergebenden Darstellungsfehler können gegenüber der Längserstreckung des gesamten Erfassungsbereichs vernachlässigt werden.

Eine weitere Ausführung besteht auch darin, dass der Öffnungswinkel eines Bilderfassungsmittels, parallel zur Arbeitsebene, zumindest 60° beträgt, insbesondere 66°. Diese Weiterbildung hat den Vorteil, dass dieser Erfassungsbereich mit üblichen, gut verfügbaren und insbesondere kostengünstigen Optiken erfassbar ist. Diese Optiken weisen zumeist nur geringe Verzeichnungsfehler auf, wodurch eine aufwändige Bildkorrektur entfällt. Unter der Ausrichtung parallel zur Arbeitsebene wird verstanden, dass die von den Schenkeln des Winkels aufgespannte Fläche parallel zur Arbeitsebene ausgerichtet ist.

Eine Weiterbildung besteht auch darin, dass eine optische Achse des Bilderfassungsmittels in Richtung parallel zur Arbeitsebene, um einen Verschwenkwinkel gegenüber der Normalen vom Bilderfassungsmittel auf den Maschinentisch verschwenkt sind. Somit ist jedes Bilderfassungsmittel nicht genau nach unten gerichtet, wodurch im Erfassungsbereich zwei Abschnitte bestehen, die jeweils nur von einem Bilderfassungsmittel erfasst werden und ein Überlappungsabschnitt, der von beiden Bilderfassungsmittel erfasst wird.

Nach einer Weiterbildung ist vorgesehen, dass der Verschwenkwinkel beider Bilderfassungsmittel gleich ist, und 20° bis 30° beträgt, insbesondere 25°. Gemäß dieser Ausbildung wird von den Bilderfassungsmittel der Erfassungsbereich symmetrisch bezüglich der Position der Bilderfassungsvorrichtung erfasst. Bevorzugt wird die Bilderfassungsvorrichtung in der Mitte der Längserstreckung des Pressbalkens angeordnet sein.

Nach einer Weiterbildung ist jedoch auch vorgesehen, dass der Verschwenkwinkel beider Bilderfassungsmittel ungleich ist, und 20° bis 30° und 40° bis 30° beträgt, insbesondere 25° und 35°. Nach dieser Weiterbildung wird von den Bilderfassungsmittel der Erfassungsbereich asymmetrisch bezüglich der Position der Bilderfassungsvorrichtung erfasst. Bevorzugt wird die Bilderfassungsvorrichtung im Mittenabschnitt, jedoch außerhalb der Mitte der Längserstreckung des Pressbalkens angeordnet sein. Die gegensinnigen Bereichsangaben für den Verschwenkwinkel ergeben sich aus der asymmetrischen Aufteilung und dem Fakt, dass der gesamte Erfassungsbereich abgedeckt werden muss.

Eine Weiterbildung besteht auch darin, dass ein Bildsynthesemodul vorhanden ist, mit dem die Kameras der vorderen Bilderfassungsvorrichtung verbunden sind, und welches Bildsynthesemodul zur Erzeugung eines vorderen Gesamtbilds des vorderseitigen Arbeits- und Manipulationsraums ausgebildet ist. Das Bildsynthesemodul kann in der zwangsläufig erforderlichen Maschinensteuerung vorhanden sein, es ist jedoch auch möglich, dass dieses Modul als eigenständiges Bildverarbeitungsmodul vorgesehen ist. Das Bildsynthesemodul weist bevorzugt eine für die Bildverarbeitung bzw. Bildbearbeitung optimierte Datenverarbeitungseinrichtung auf und ist insbesondere zur Überlagerung bzw. zur Verschmelzung der beiden Einzelbilder der Bilderfassungsmittel zu einem Gesamtbild ausgebildet.

Eine Weiterbildung besteht auch darin, dass auch im Maschinenraum oberhalb des Maschinentisches, in einem Mittenabschnitt der Längserstreckung des Pressbalkens, eine weitere Bilderfassungsvorrichtung angeordnet ist, welche zumindest zwei weitere Bilderfassungsmittel aufweist, welche bevorzugt als Kameras ausgebildet sind und dass die Kameras in Richtung eines, im Maschinenraum vorhandenen Hinteranschlags ausgerichtet sind. Aufgrund konstruktiver Gegebenheiten der Biegemaschine hat ein Maschinenbediener zumeist keine direkte Sicht in den Maschinenraum. Mit dieser Weiterbildung wird nun gewährleistet, dass auch dieser nicht unmittelbar einsehbare Bereich, dem Maschinenbediener am Anzeigemittel dargestellt wird.

Eine weitere Ausbildung besteht auch darin, dass ein Bildsynthesemodul vorhanden ist, mit dem die Kameras der hinteren weiteren Bilderfassungsvorrichtung verbunden sind, und welches Bildsynthesemodul zur Erzeugung eines hinteren Gesamtbilds des hinteren Maschinenraums ausgebildet ist. Die zuvor für das vordere Gesamtbild beschriebenen Eigenschaften sind sinngemäß auf diese Ausbildung umzulegen.

Eine vorteilhafte Weiterbildung besteht darin, dass das Bildsynthesemodul zur Erzeugung eines Gesamtbilds des vorderen Arbeits- und Manipulationsraums und des hinteren Maschinenraums ausgebildet ist. Damit kann den Maschinenbediener ein Abbild des Bereichs vor der Biegemaschine und gleichzeitig auch ein Abbild des Bereichs im Inneren der Biegemaschine, am Anzeigemittel dargestellt werden.

Nach einer weiteren Ausführung ist vorgesehen, dass ein Bildanalysemodul vorhanden ist, welches mit dem Bildsynthesemodul verbunden ist, und welches Bildanalysemodul zur Erkennung einer Struktur eines zu bearbeitenden Bleches ausgebildet ist. Damit lässt sich erreichen, dass ein im Erfassungsbereich angeordnetes Werkstück erkannt wird, insbesondere, dass eine äußere Kontur des Bleches erkannt wird. Das Bildanalysemodul kann bspw. mittels einer Kontrastanalyse und/oder einer Reflexionsanalyse das erfasste Abbild analysieren und so das eingelegte Blech erkennen. Besonders vorteilhaft ist, wenn Kanten und/oder markante Strukturen des eingelegten Bleches erkannt werden, da sich somit eine Prüfung auf ein korrektes Einlegen durchführen lässt.

Die Aufgabe der Erfindung wird auch durch Verfahren zur Darstellung eines Gesamtbilds eines längserstreckten Arbeitsbereichs einer Biegemaschine gelöst, welches Verfahren auf einer gegenständlichen Biegemaschine ausgeführt wird. Dabei wird von der im Arbeits- und Manipulationsraum angeordneten Bilderfassungsvorrichtung ein Bereich entlang des Maschinentisches als vorderer Aufnahmebereich erfasst und als Live-Bild auf einem Anzeigemittel dargestellt. Von der ersten Kamera der Bilderfassungsvorrichtung wird ein erster Abschnitt als erstes Teilbild und von der zweiten Kamera der Bilderfassungsvorrichtung ein zweiter Abschnitt als zweites Teilbild längs des vorderen Aufnahmebereichs erfasst. Der erste und zweite Abschnitt des vorderen Aufnahmebereichs werden in einem Teilabschnitt überlappend erfasst, was einen ersten Überlappungsbereich bildet. Vom Bildsynthesemodul wird eine Bildausrichtung und Bildskalierung des ersten und zweiten Teilbilds durchgeführt. Ferner wird vom Bildsynthesemodul im ersten Überlappungsbereich wird vom Bildsynthesemodul eine Bildsynthese des ersten und zweiten Teilbilds durchgeführt und das Live-Bild gebildet.

Um die erfassten Bilder der beiden Kameras zu einem Gesamtbild zusammenfügen zu können besteht die Möglichkeit, die Bilder ohne inhaltliche Verarbeitung aneinander zu fügen, was jedoch mit Nachteilen verbunden ist. Dazu ist es insbesondere erforderlich, dass die beiden Kameras sehr exakt zueinander ausgerichtet angeordnet und justiert sind, und diese Ausrichtung trotz der Erschütterungen im bestimmungsgemäßen Betrieb der Biegepresse aufrecht bleiben muss.

Mit der gegenständlichen Ausführung ist gewährleistet, dass im Überlappungsbereich von beiden Kameras ein gemeinsamer Bereich des vorderen Aufnahmebereichs erfasst wird. Nach einer Ausrichtung und Skalierung der Teilbilder, zum Ausgleich eventueller Ungenauigkeiten der Kameraausrichtung und einer Entzerrung und ggf. einer Belichtungsanpassung, werden die Teilbilder im Überlagerungsbereich zusammengeführt - bspw. mittels einer Verlaufsfunktion. Im synthetisierten Gesamtbild ist der Ursprung aus zwei Teilbildern weitestgehend nicht mehr zu erkennen.

Nach einer weiteren Ausführung ist vorgesehen, dass von der im Maschinenraum angeordneten weiteren Bilderfassungsvorrichtung ein Bereich entlang des Maschinentisches als hinterer Aufnahmebereich erfasst und als Live-Bild auf einem Anzeigemittel dargestellt wird. Dabei wird von der ersten Kamera der weiteren Bilderfassungsvorrichtung ein erster Abschnitt als drittes Teilbild und von der zweiten Kamera der weiteren Bilderfassungsvorrichtung ein zweiter Abschnitt als viertes Teilbild längs des hinteren Aufnahmebereichs erfasst. Der erste und zweite Abschnitt des hinteren Aufnahmebereichs werden in einem Teilabschnitt überlappend erfasst, was einen zweiten Überlappungsbereich bildet. Vom Bildsynthesemodul wird eine Bildausrichtung und Bildskalierung des dritten und vierten Teilbilds durchgeführt. Im zweiten Überlappungsbereich wird eine Bildsynthese des dritten und vierten Teilbilds durchgeführt und das Live-Bild gebildet wird.

Das Beschreibung der vorherigen Ausführungsvariante ist sinngemäß auf die anspruchsgemäße Ausführung umzulegen.

Eine Weiterbildung sieht ferner vor, dass der vordere und der hintere Aufnahmebereich überlappend erfasst wird und einen dritten Überlappungsbereich bildet, und im dritten Überlappungsbereich eine Bildsynthese aller vier Teilbilder durchgeführt, und das Live-Bild gebildet wird. Diese Weiterbildung hat den Vorteil, dass aus den einzelnen Teilbilder ein einziges Gesamtbild erzeugt und dem Maschinenbediener am Anzeigemittel dargestellt wird. Der Maschinenbediener erhält somit eine Gesamtdarstellung des Bereichs vor der Biegemaschine und des zumeist nicht direkt einsehbaren Maschineninnenraums.

Von Vorteil ist auch eine Weiterbildung, nach der vom Bildsynthesemodul ein hinterlegtes Referenzbild des Werkstücks im Live-Bild am Anzeigemittel dargestellt wird. Somit steht dem Maschinenbediener eine Darstellung der korrekten Ausrichtung des Werkstücks zur Verfügung. Das hinterlegte Referenzbild kann insbesondere sowohl die korrekte Ausrichtung des Werkstücks, als auch die korrekte Position in Bezug zu den Biegewerkzeugen (Ober- bzw. Unterwerkzeug) umfassen.

Nach einer weiteren Ausführung ist vorgesehen, dass vom Bildanalysemodul mittels einer Musteranalyse im Live-Bild die Ausrichtung eines zu bearbeitenden Werkstücks erkannt wird und durch Vergleich mit einem hinterlegten Referenzbild des Werkstücks, eine Transformationsinformation gebildet und im Live-Bild am Anzeigemittel dargestellt wird.

Bevorzugt wird das Bildanalysemodul, wie auch das Bildsynthesemodul, in der Maschinensteuerung der Biegemaschine integriert angeordnet sein, oder auch als eigenständiges Modul vorgesehen sein. Es ist auch möglich, dass die Maschinensteuerung eine Datenverbindung zu einem Produktionsplanungssystem hat. Referenzbilder können nun im eigenständigen Modul, in der Maschinensteuerung oder auch im Produktionsplanungssystem hinterlegt sein. Unter einem Referenzbild wird eine Darstellung des zu bearbeitenden Werkstücks verstanden, dies können auch CAD-Konstruktionsdaten sein. Bevorzugt wird das Referenzbild dem erfassten Live-Bild überlagert, um so dem Maschinenbediener eine visuelle Rückmeldung über die korrekte Einlageposition geben zu können.

Die Transformationsinformation kann bspw. durch, im Live-Bild hervorgehobene Kanten gebildet sein, sodass der Maschinenbediener erkennen kann, wie das Werkstück auszurichten ist. Es ist jedoch auch möglich, dass die Transformationsinformation Richtungspfeile bzw. Bewegungsanweisungen umfasst.

Eine Weiterbildung kann auch darin bestehen, dass die Transformationsinformation als Animation erzeugt wird. Beispielsweise kann vom einem VR-Modul aus der aktuellen und der korrekten Soll-Ausrichtung die Transformation durch Bewegungsspuren, oder durch eine bewegte Darstellung des Werkstücks zur Erreichung der korrekten Ausrichtung gebildet sein.

Eine Weiterbildung besteht auch darin, dass vom Bildanalysemodul über eine Datenverbindung auf ein, in einem Produktionsplanungssystem hinterlegtes Referenzbild des Werkstücks zugegriffen wird, Somit besteht die Möglichkeit, direkt auf aktuellste Konstruktions- bzw. Fertigungsdaten zugreifen zu können.

Von Vorteil ist auch eine Weiterbildung, nach der vom Bildanalysemodul mittels einer Musteranalyse im Live-Bild eine Kennung eines im Pressbalken und/oder im Maschinentisch angeordneten Biegewerkzeugs ausgelesen und ausgewertet wird. Mit dieser Weiterbildung ist eine Prüfung möglich, ob der korrekte Werkzeugsatz gerüstet ist, bzw. ob das Werkstück für den nächsten Bearbeitungsschritt an der richtigen Position läng des Pressbalkens angeordnet ist.

Weitere vorteilhafte Ausführungsformen betreffen Weiterbildungen des Anzeigemittels. Beispielsweise kann vorgesehen sein, dass das Anzeigemittel durch einen Flachbildschirm gebildet ist, welcher am Pressbalken angeordnet ist, insbesondere an der Vorderseite. Aufgrund der geringen Tiefe und des geringen Gewichts, kann ein Flachbildschirm leicht im Sichtbereich des Bedieners angebracht werden. Auch erreicht ein Flachbildschirm eine Helligkeit des dargestellten Bildes, dass dieses auch bei Tageslicht in einer Produktionshalle gut zu erkennen ist. Diese Ausführungsform schließt ausdrücklich eine Variante mit ein, bei der das Anzeigemittel auch durch mehr als einen Flachbildschirm gebildet ist. Abhängig von der Maschinenbreite sind Ausführungen denkbar, bei denen entlang des Pressbalkens, mehrere Flachbildschirme angeordnet sind und insgesamt das Anzeigemittel bilden.

Eine weitere vorteilhafte Ausführung besteht auch darin, dass der der Flachbildschirm in einer Montagevorrichtung angeordnet ist, welche Montagevorrichtung eine Positionierung des Flachbildschirms entlang der Längserstreckung des Pressbalkens ermöglicht. Eine Biegepresse weist zumeist eine große Längserstreckung auf, sodass eine zentrale Positionierung der Anzeige nur für Biegearbeiten im Mittenbereich der Biegepresse vorteilhaft ist. Mit dieser Weiterbildung kann der Flachbildschirm entlang der Biegepresse bewegt werden und insbesondere im unmittelbaren Nahbereich der durchzuführenden Biegeumformung positioniert werden. Eine weitere Ausführung kann auch darin bestehen, dass die Positionierung mittels eines Stellmittels erfolgt, sodass vom Maschinenbediener keine Handlung erforderlich ist. Die Anzeige wird dann von der Maschinensteuerung an den Ort der jeweils nächsten Biegeumformung bewegt.

Unter Flachbildschirm wird bevorzugt eine aktive, selbstleuchtende Anzeige verstanden, bspw. ein TFT-Display oder ein OLED-Display. Es können jedoch auch passive Anzeigen verwendet werden, bspw. ein ePaper-Display. Dieses hat den Vorteil, dass auch bei sehr hellem Umgebungslicht, ein Ablesen problemlos möglich ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Überblicksdarstellung der Biegemaschine mit einer Arbeitsbereich-Bilderfassungsvorrichtung gemäß einer Ausführungsvariante;
- Fig. 2: a) und b) die geometrische Situation der Bilderfassung gemäß zwei möglicher Ausführungsvarianten;
- Fig. 3: eine Draufsicht auf die Biegemaschine mit einer weiteren Ausführung einer Bilderfassungsvorrichtung;
- Fig. 4: die Bildung eines Gesamtabbilds aus erfassten Teilbildern;
- Fig. 5: eine weitere mögliche Ausführungsform mit einer Einblendung einer Transformationsinformation.

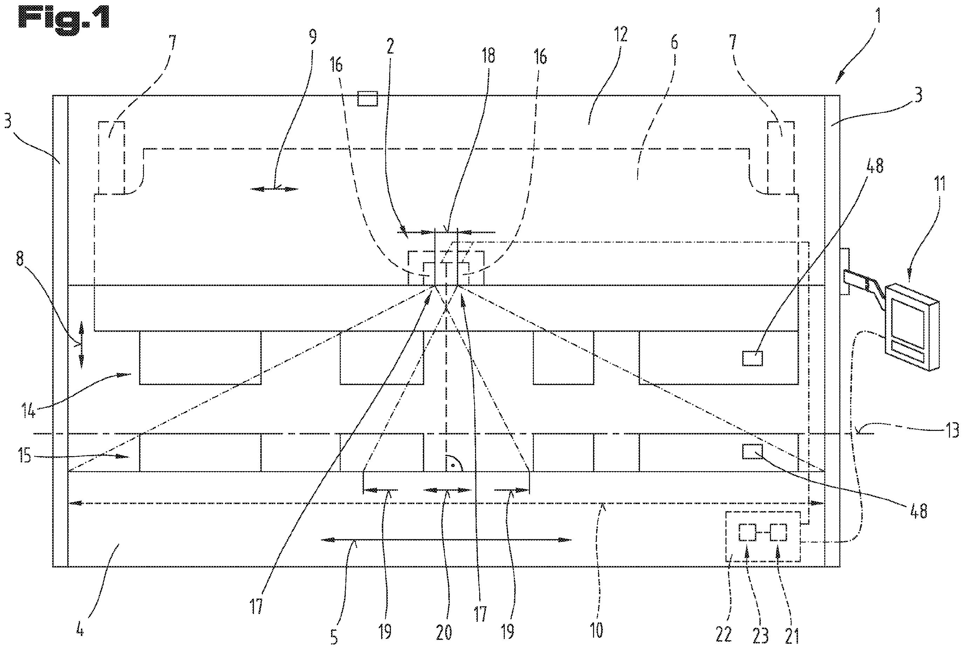

Fig. 1 zeigt eine Ausführung der gegenständlichen Biegemaschine 1 mit einer Arbeitsbereich-Bilderfassungsvorrichtung 2. Die Biegemaschine 1 weist einen Maschinenrahmen auf, welcher zwei Seitenteile 3 umfasst, wobei zwischen diesen Seitenteilen 3 der längserstreckte Maschinentisch 4 angeordnet ist, und wobei die Längserstreckung 5 des Maschinentisches 4 eine Maschinenbreite definiert. Im Maschinenrahmen ist ferner ein Pressbalken 6 geführt angeordnet, und wird von einem Antriebsmittel 7 relativ zum Maschinenrahmen bewegt und führt insbesondere beim nach unten fahren die Biegeumformung durch. Die Bewegungsrichtung 8 des Pressbalkens 6 und dessen, zur Längserstreckung 5 des Maschinentisches 4 parallele Längserstreckung 9, spannen eine Arbeitsebene auf. Die Arbeitsebene legt einen vor der Biegemaschine 1 befindlichen Arbeits- und Manipulationsraum und einen, davon abgesetzten und insbesondere abgeschlossenen, hinteren Maschinenraum fest. Es wird festgehalten, dass die Biegelinie, also jene Linie, auf der das Oberwerkzeug das Werkstück kontaktiert und in das Unterwerkzeug drückt, in der Arbeitsebene liegt. Die Bilderfassungsvorrichtung 2 weist einen Erfassungsbereich 10 auf, welcher in Richtung des Maschinentisches 4 ausgerichtet ist. Der erfasste Abschnitt wird auf einem, mit der Bilderfassungsvorrichtung 2 verbundenen Anzeigemittel 11 dargestellt.

Die Bilderfassungsvorrichtung 2 ist in einer Pressbalken-Verkleidung 12 angeordnet, welche Pressbalken-Verkleidung 12 sich aus Sicht des Maschinenbedieners vor dem Pressbalken 6 befindet und insbesondere somit auch einen Schutz vor dem sich bewegenden Pressbalken 6 bietet. Aus konstruktiven Gründen zur Erreichung eines möglichst großen freien Biegeraums, ist die Pressbalken-Verkleidung 12 möglichst nahe am Pressbalken angeordnet und weist somit in Draufsicht einen sehr geringen horizontalen Abstand von der Biegelinie 13 auf. Die Biegelinie 13 ist jene Linie, auf jener ein im Pressbalken 6 angeordnetes Oberwerkzeug 14, ein umzuformendes Werkstück kontaktiert und dieses in ein am Maschinentisch 4 angeordnetes Unterwerkzeug 15 drückt.

Die Bilderfassungsvorrichtung 2 weist zwei Bilderfassungsmittel 16 auf, welche bevorzugt durch 2D-Kameras gebildet sind. Insbesondere wird von jedem dieser Bilderfassungsmittel 16 ein Teilabschnitt des Maschinentisches 4 erfasst. Es wird festgehalten, dass dieser Erfassungsbereich bzw. jeder dieser Teilabschnitte sowohl eine Oberfläche des Maschinentisches 4, als auch den Bereich entlang der Biegelinie 13 umfassen kann. Insbesondere bedeutet das, dass sowohl ein am Maschinentisch 4 aufgelegtes umzuformendes Werkstück im Erfassungsbereich 10 liegt und somit erfasst wird, und ferner, dass auch ein am Unterwerkzeug 15 zur Biegung aufgelegtes Werkstück in den Erfassungsbereich 10 fällt.

Aus technologischen Gründen wird zwischen den optischen Zentren 17 der beiden Bilderfassungsmittel 16, eine Distanz 18 bestehen, da diese Distanz 18 jedoch wenige Zentimeter, insbesondere 10 cm beträgt, ist sie gegenüber der Maschinenbreite bzw. der Längserstreckung 5 zu vernachlässigen. Somit kann von einer übereinstimmenden Anordnung der optischen Zentren 17 der beiden Bilderfassungsmittel 16 ausgegangen werden.

In der Figur dargestellt ist auch, dass der gesamte Erfassungsbereich 10 von jedem Bilderfassungsmittel 16 nur in einem Teilabschnitt 19 erfasst wird, wobei sich die Teilabschnitte 19 in einem ersten Überlappungsbereich 20 überdecken.

Die beiden Bilderfassungsmittel 16 der Bilderfassungsvorrichtung 2 sind mit einem Bildsynthesemodul 21 verbunden, welches dazu ausgebildet ist, das erfasste erste und zweite Teilbild aufzubereiten und im erfassten ersten Überlappungsbereich 20 eine Synthese der beiden Bilder durchzuführen, sodass ein gesamtes Abbild erzeugt wird, welches anschließend am Anzeigemittel 11 dargestellt wird. Bevorzugt wird das Bildsynthesemodul 21 in einer Maschinensteuerung 22 angeordnet sein, welche die Ablaufsteuerung der Biegemaschine 1 durchführt und überwacht. Diese Maschinensteuerung 22 kann auch mit einem zentralen Produktionsplanungssystem verbunden sein, sodass die Maschinensteuerung und damit die darin angeordneten weiteren Module direkt auf die Konstruktionsdaten des umzuformenden Werkstücks zugreifen können. In der Maschinensteuerung 22 kann beispielsweise auch ein Bildanalysemodul 23 vorhanden sein, welches mit dem Bildsynthesemodul verbunden ist und im erfassten Abbild ein umzuformendes Blech, insbesondere die Ausrichtung des Blechs, erkennen kann.

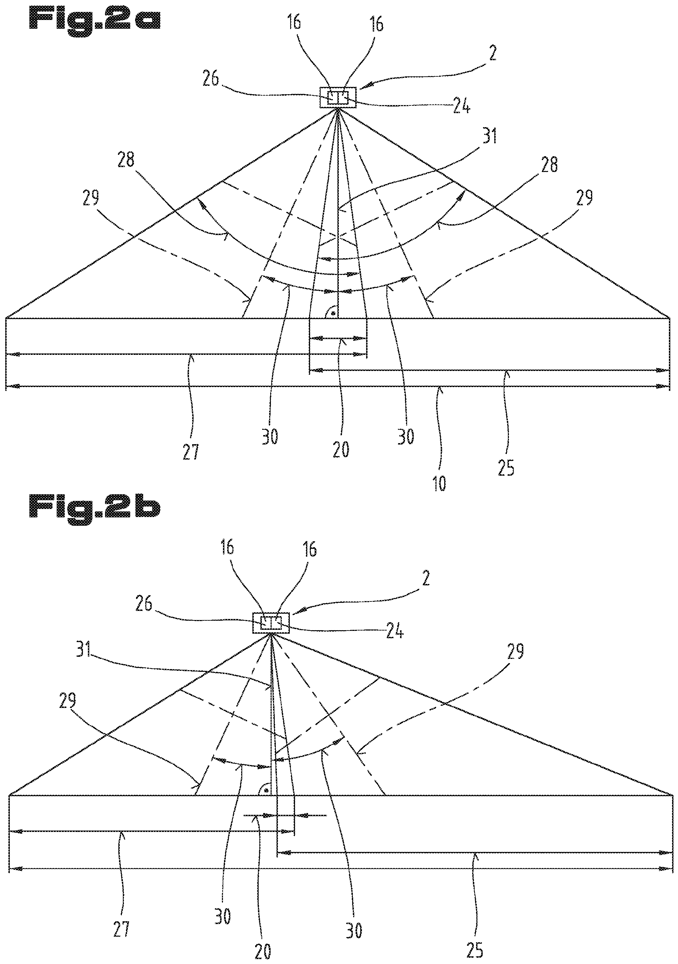

In den Fig. 2a und 2b sind zwei mögliche Ausführung der Anordnung bzw. der Ausrichtung der Bilderfassungsmittel dargestellt. Zur Vereinfachung der Darstellung und insbesondere zur Verdeutlichung der optischen Gegebenheiten sind die Elemente der Biegemaschine nicht dargestellt.

Fig. 2a zeigt die optischen Gegebenheiten der beiden Bilderfassungsmittel in einer ersten Konfiguration, bei der die beiden Teilabschnitte symmetrisch zum Normalabstand der Bilderfassungsvorrichtung auf den Maschinentisch ausgebildet sind.

Die optischen Achsen der beiden Bilderfassungsmittel 16 der Bilderfassungsvorrichtung 2 sind in einem Abstand zueinander angeordnet, wobei dieser Abstand in Bezug zur Längsausdehnung des Erfassungsbereichs 10 zu vernachlässigen ist, sodass von einer übereinstimmenden Anordnung der optischen Achsen ausgegangen werden kann. Die tatsächlich vorhandenen geringfügigen Unterschiede aufgrund der real distanzierten Anordnung fallen bei der Gesamtbetrachtung nicht ins Gewicht. Gemäß einer bevorzugten Ausbildung ist das Bilderfassungsmittel 16 durch eine Kamera gebildet, sodass eine erste Kamera 24 einen ersten Abschnitt 25 als erstes Teilbild, und eine zweite Kamera 26 einen zweiten Abschnitt 27 als zweites Teilbild erfasst.

Jedes Bilderfassungsmittel 16 weist einen Bild-Öffnungswinkel 28 auf, welcher symmetrisch zur optischen Achse 29 des Bilderfassungsmittels angeordnet ist. Der Erfassungsbereich des Bilderfassungsmittels 16 in Richtung der optischen Achse 29 gesehen, ist zumeist rechteckig ausgebildet, wobei der Öffnungswinkel 28 hierin derart verstanden wird, dass der Winkel, bzw. die durch den Winkel gebildete Fläche, parallel zur Längserstreckung des Erfassungsbereichs und somit parallel zur Längserstreckung des Pressbalkens ausgerichtet ist, und somit die größte Längserstreckung des Erfassungsbereichs definiert.

In der Ausführung gemäß Fig. 2a sind die beiden optischen Achsen 29 symmetrisch um einen Verschwenkwinkel 30 bezüglich des Normalabstands 31 verschwenkt. In dieser Ausführung beträgt der Verschwenkwinkel zwischen 20 und 30°, wobei ein Winkel von 25° bevorzugt ist. Mit einem Öffnungswinkel 28 von zumindest 60°, bevorzugt jedoch 66°, kann bei einem Normalabstand 31 von 60 cm bis 150 cm, ein Erfassungsbereich 10 von ca. 1 bis ca. 6 m erfasst werden.

Fig. 2b zeigt eine weitere mögliche Ausführung, bei der die optischen Achsen 29 asymmetrisch bezüglich des Normalabstands 31 verschwenkt sind. Der Verschwenkwinkel 30 beträgt für die zweite Kamera 26 20° bis 30° und für die erste Kamera 24 gegengleich 40° bis 30°.

Bevorzugt wird ein Verschwenkwinkel von 25° für die zweite Kamera 26 und 35° für die erste Kamera 24.

Auch hier wird wieder von der ersten Kamera 24 ein erster Abschnitt 25 und von der zweiten Kamera 26 ein zweiter Abschnitt 27 erfasst, wobei sich die beiden Abschnitte in einem ersten Überlappungsbereich 20 überdecken.

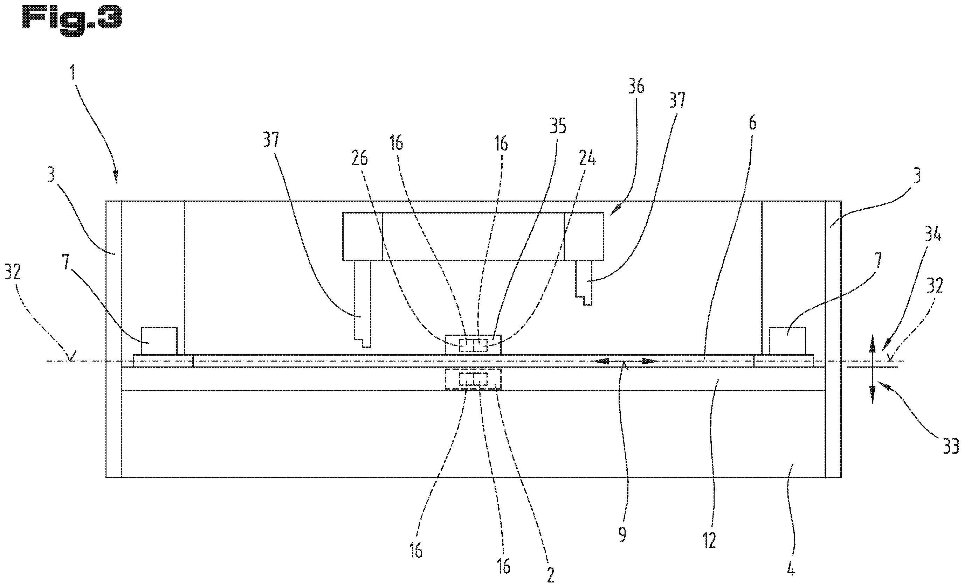

Fig. 3 zeigt eine Draufsicht auf die gegenständliche Biegemaschine 1, insbesondere sind der Maschinentisch 4, die Seitenteile 3 und der von den Antriebsmitteln 7 bewegbare Pressbalken 6 dargestellt. Der Pressbalken 6 und dessen Bewegungsrichtung spannen (in Normalrichtung zum Blatt) eine Arbeitsebene 32 auf, welche Arbeitsebene 32 einen vorderen Arbeits- und Manipulationsraum 33 und einen davon abgegrenzten, und insbesondere abgeschlossenen hinteren Maschinenraum 34 festlegt.

Im vorderen Arbeits- und Manipulationsraum 33 ist eine Bilderfassungsvorrichtung 2 mit zwei Bilderfassungsmittel 16 angeordnet. Insbesondere ist diese Bilderfassungsvorrichtung 2 in der Pressbalken-Verkleidung 12 angeordnet.

Gemäß einer weiteren Ausführung ist jedoch auch im Maschinenraum 34 oberhalb des Maschinentisches 4 in einem Mittelabschnitt der Längserstreckung 9 des Pressbalkens 6 eine weitere Bilderfassungsvorrichtung 35 angeordnet. Auch diese weitere Bilderfassungsvorrichtung 35 weist zwei Bilderfassungsmittel 16 auf, welche auch bevorzugt als 2D-Kameras ausgebildet sind. Von dieser weiteren Bilderfassungsvorrichtung 35 wird der hintere Maschinenraum 34 erfasst, insbesondere ein dort angeordneter Hinteranschlag 36 mit Anschlagfinger 37 zum Anlegen des umzuformenden Werkstücks.

Auf eine Beschreibung der optischen Verhältnisse betreffend diese weitere Bilderfassungsvorrichtung 35 wird auf die Beschreibung der Fig. 1 und 2 verwiesen, welche sinngemäß auch auf die weitere Bilderfassungsvorrichtung 35 umzulegen sind. Insbesondere wird von der ersten Kamera 24 der weiteren Bilderfassungsvorrichtung 35 ein erster Abschnitt als drittes Teilbild 42 und von der zweiten Kamera 26 der weiteren Bilderfassungsvorrichtung ein zweiter Abschnitt als viertes Teilbild 43 längs des hinteren Aufnahmebereichs erfasst. Ebenfalls wird ein Abschnitt des Erfassungsbereichs von beiden Bilderfassungsmittel 16 erfasst, wodurch ein zweiter Überlappungsbereich 44 gebildet ist.

Es wird explizit darauf hingewiesen, dass die Begriffe erste und zweite Bilderfassungsvorrichtung und erste und weite Kamera, sowohl für die vordere Bilderfassungsvorrichtung (im Arbeits- und Manipulationsraum), als auch für die hintere weitere Bilderfassungsvorrichtung (im Maschinenraum) verwendet werden. Es ist nicht davon auszugehen, dass es sich dabei um dieselben Vorrichtungen handelt, sondern zur Vereinfachung der Beschreibung, die Begriffe gleichlautend gewählt wurden.

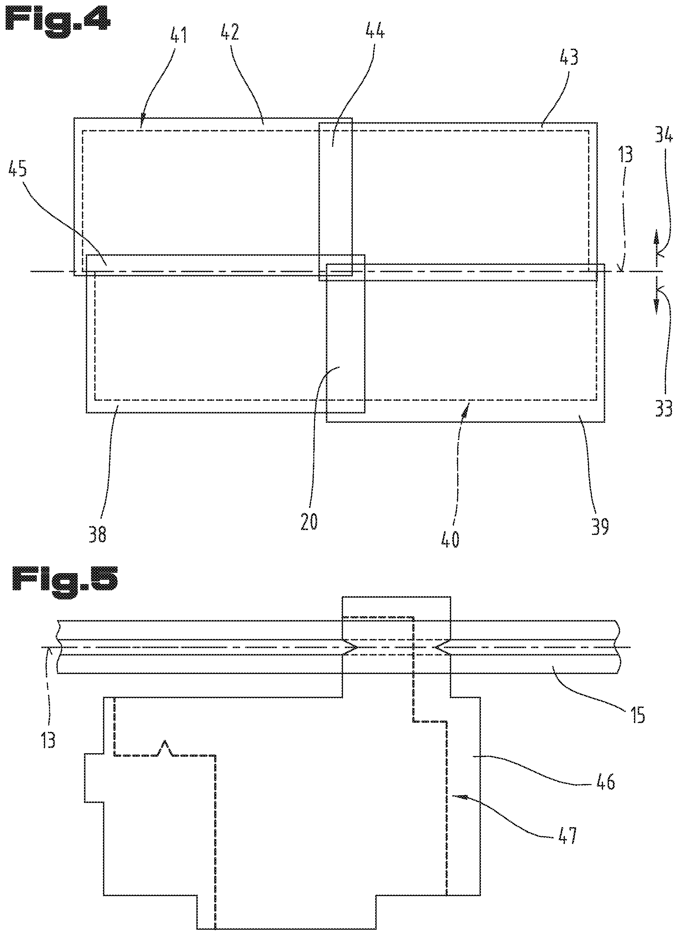

Fig. 4 zeigt eine Darstellung, wie die erfassten Teilbildern zu einem gemeinsamen Live-Bild zusammengefügt werden. Die Elemente der Biegemaschine sowie die Elemente der Bilderfassungsvorrichtungen sind aus Vereinfachungsgründen nicht dargestellt. Von den Bilderfassungsmittel der Bilderfassungsvorrichtung in der Pressbalkenverkleidung, also im vorderen Arbeits- und Manipulationsraum 33, werden das erste 38 und zweite 39 Teilbild erfasst. Aufgrund der Anordnung der Bilderfassungsmittel der Bilderfassungsvorrichtung wird der vordere Aufnahmebreich 40 von den Bilderfassungsmittel derart erfasst, dass in einem ersten Überlappungsbereich 20 in beiden erfassten Teilbildern der selbe Abschnitt des vorderen Aufnahmebereichs 40 dargestellt ist.

Von den Bilderfassungsmittel der weiteren Bilderfassungsvorrichtung, welche im hinteren Maschinenraum 34 angeordnet sind, wird ein hinterer Aufnahmebereich 41 als drittes 42 und viertes 43 Teilbild erfasst. Auch hier findet die Erfassung der Teilbilder wieder derart statt, dass ein Abschnitt des hinteren Aufnahmebereichs 41 als zweiter Überlappungsbereich 44 in beiden Teilbildern dargestellt ist.

Wie auch für den vorderen Aufnahmebereich 40, wird vom Bildsynthesemodul eine Bildausrichtung und Bildskalierung des dritten 42 und vierten 43 Teilbilds durchgeführt und im zweiten Überlappungsbereich 44 eine Bildsynthese der beiden Teilbilder durchgeführt und daraus das Live-Bild gebildet.

Zusätzlich ist gemäß einer Ausführung vorgesehen, dass auch der vordere 40 und hintere 41 Aufnahmebereich überlappend erfasst werden, insbesondere dass sich das erste 38 und dritte 42 Teilbild und das zweite 39 und vierte 43 Teilbild überlagern, wobei sich in einem Mittenabschnitt alle vier Teilbilder überlagern. Durch diese Ausführung wird ein dritter Überlappungsbereich 45 gebildet, in welchem vom Bildsynthesemodul eine Synthese aller vier Teilbilder durchgeführt und das Live-Bild gebildet wird. Mit dieser Ausführung bekommt der Maschinenbediener am Anzeigemittel ein Live-Bild der Verhältnisse im vorderen Arbeits- und Manipulationsraum 33 und gleichzeitig im hinteren Maschinenraum 34 dargestellt.

Fig. 5 zeigt eine weitere mögliche Ausführung, bei der die Ausrichtung eines umzuformenden Werkstücks 46 ermittelt, die ermittelte Ausrichtung mit einer hinterlegten Soll-Ausrichtung verglichen und bei einer Abweichung eine Transformationsinformation 47 dargestellt wird. Bei der Biegeumformung wird das zu bearbeitende Werkstück 46 der Biegemaschine zugeführt und zumeist am Unterwerkzeug 15 abgelegt und derart ausgerichtet, dass die nächste Biegeumformung mit der Biegelinie 13 übereinstimmt. Gerade bei kleinen Losgrößen kann es vorkommen, dass der Maschinenbediener das Werkstück 46 falsch ausgerichtet in die Biegemaschine einlegt, wodurch der nächste Biegeschritt fehlerhaft durchgeführt werden würde. Durch eine Bildanalyse des Live-Bildes bzw. der einzelnen Teilbilder kann mittels einer Mustererkennung das angeordnete Werkstück erkannt werden. Insbesondere lässt sich der Umriss erkennen, wobei nach Vergleichen mit einem hinterlegten Referenzbild die korrekte Soll-Ausrichtung als Transformationsinformation 47 im Live-Bild eingeblendet werden kann. Somit kann der Maschinenbediener sehr einfach erkennen, ob das Werkstück korrekt eingelegt wurde und die Biegeumformung durchzuführen ist. Die Transformationsinformation 47 kann auch teilweise animiert sein, beispielsweise können Richtungsanweisungen wie das Werkstück zu manipulieren ist, in das Live-Bild eingeblendet werden. Aufgrund der Anweisungen kann der Maschinenbediener sehr schnell die korrekte Ausrichtung des Werkstücks herstellen, wodurch der Biegeprozess deutlich geringer verzögert ist.

Es ist jedoch auch möglich, ohne Ermittlung der Ausrichtung und Vergleich mit einer hinterlegten Soll-Ausrichtung, lediglich die Soll-Position und/oder die Soll-Ausrichtung als Transformationsinformation darzustellen.

Figur 1 zeigt eine weitere mögliche Ausführung, nach der an den Biegewerkzeugen eine Identifikationskennung 48 angebracht ist, welche im erfassten Teilbild oder im generierten Live-Bild gefunden und erkannt werden. Die Identifikationskennung kann bspw. als 1D, oder 2D-Code ausgebildet sein. Durch Auslesen und Analysieren dieser Identifikationskennung bspw. durch das Bildanalysemodul, kann auch von Bildanalysemodul oder der Maschinensteuerung ermittelt werden, ob die korrekten Werkzeuge an der korrekten Position gerüstet wurden. Der Vorteil der gegenständlichen Biegemaschine liegt nun darin, dass dem Maschinenbediener zu jeder Zeit ein Gesamtüberblick über den Bedienprozess gegeben werden kann. Insbesondere wird der Maschinenbediener bei der Herstellung kleiner Losgrößen unterstützt, indem ihm relevante Information den Biegevorgang betreffend direkt im Live-Bild am Anzeigemittel dargestellt wird.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Fig. 1, 3 und 5 sind weitere und gegebenenfalls für sich eigenständige Ausführungsform der Biegemaschine mit einer Arbeitsbereich-Bilderfassungsvorrichtung gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten der Biegemaschine mit einer Arbeitsbereich-Bilderfassungsvorrichtung, wobei an dieser Stelle bemerkt sei, dass die Erfindung nicht auf die speziell dargestellten Ausführungsvarianten derselben eingeschränkt ist, sondern die Erfindung durch die Umfang der Ansprüche definiert wird.

Der Ordnung halber sei abschließend darauf hingewiesen, dass zum besseren Verständnis des Aufbaus der Biegemaschine mit einer Arbeitsbereich-Bilderfassungsvorrichtung, diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Biegemaschine | 31 | Normalabstand |
| 2 | Bilderfassungsvorrichtung | 32 | Arbeitsebene |
| 3 | Seitenteile | 33 | Arbeits- und Manipulationsraum |
| 4 | Maschinentisch | 34 | Maschinenraum |
| 5 | Längserstreckung | 35 | weitere Bilderfassungsvorrichtung |
| 6 | Pressbalken | 36 | Hinteranschlag |
| 7 | Antriebsmittel | 37 | Anschlagfinger |
| 8 | Bewegungsrichtung | 38 | erstes Teilbild |
| 9 | Längserstreckung | 39 | zweites Teilbild |
| 10 | Erfassungsbereich | 40 | vorderer Aufnahmebereich |
| 11 | Anzeigemittel | 41 | hinterer Aufnahmebereich |
| 12 | Pressbalken-Verkleidung | 42 | drittes Teilbild |
| 13 | Biegelinie | 43 | viertes Teilbild |
| 14 | Oberwerkzeug | 44 | zweiter Überlappungsbereich |
| 15 | Unterwerkzeug | 45 | dritter Überlappungsbereich |
| 16 | Bilderfassungsmittel | 46 | Werkstück |
| 17 | optisches Zentrum | 47 | Transformationsinformation |
| 18 | Distanz | 48 | Identifikationskennung |
| 19 | Teilabschnitt | | |
| 20 | erster Überlappungsbereich | | |
| 21 | Bildsynthesemodul | | |
| 22 | Maschinensteuerung | | |
| 23 | Bildanalysemodul | | |
| 24 | Erste Kamera | | |
| 25 | erster Abschnitt | | |
| 26 | Zweite Kamera | | |
| 27 | zweiter Abschnitt | | |
| 28 | Öffnungswinkel | | |
| 29 | optische Achse | | |
| 30 | Verschwenkwinkel | | |

## Patentansprüche

1. Biegemaschine (1) mit einer Arbeitsbereich-Bilderfassungsvorrichtung (2),
wobei die Biegemaschine (1) einen Maschinenrahmen,
einen längserstreckten, feststehenden Maschinentisch (4)
und einen längserstreckten Pressbalken (6) aufweist, welcher Pressbalken (6) im Maschinenrahmen geführt und von einem Antriebsmittel (7) relativ zu diesem beweglich aufgenommen ist,
und wobei der Maschinenrahmen ferner zwei Seitenteile (3) aufweist, welche in Richtung der Längserstreckung (5) des Maschinentisches (4) durch eine Maschinenbreite voneinander distanziert sind,
und wobei die Längserstreckung (5) und die Bewegungsrichtung (8) des Pressbalkens (6) eine Arbeitsebene (32) aufspannen
die Arbeitsebene (32) einen vorderen Arbeits- und Manipulationsraum (33) und einen davon abgegrenzten, und insbesondere abgeschlossenen, hinteren Maschinenraum (34) festlegt,
und wobei die Bilderfassungsvorrichtung (2) zwei Bilderfassungsmittel (16) aufweist,
und dass ein Erfassungsbereich (10) der Bilderfassungsvorrichtung (2) in Richtung des Maschinentisches (4) ausgerichtet ist, und dass jedes Bilderfassungsmittel (16) einen Teilabschnitt (19) in Richtung des Maschinentisches (4) erfasst
und wobei die Bilderfassungsvorrichtung mit einem Anzeigemittel (11) verbunden ist,
**dadurch gekennzeichnet, dass**
die Bilderfassungsvorrichtung (2) im Arbeits- und Manipulationsraum (33) oberhalb des Maschinentisches (4), in einem Mittenabschnitt der Längserstreckung (9) des Pressbalkens in einer Pressbalken-Verkleidung (12) angeordnet ist
und das Anzeigemittel (11) zur Darstellung des erfassten Abbilds des Erfassungsbereichs (10) ausgebildet ist und
die optischen Zentren der beiden Bilderfassungsmittel (16), im Vergleich zur Längserstreckung (5) des Maschinentisches (4), übereinstimmen, insbesondere mit einer Distanz (18) zueinander von weniger als 10cm angeordnet sind.

2. Biegemaschine nach Anspruche 1, **dadurch gekennzeichnet, dass** das Bilderfassungsmittel (16) durch eine 2D-Kamera gebildet ist.

3. Biegemaschine nach Anspruch 1, **dadurch gekennzeichnet, dass** das Bilderfassungsmittel (16) durch einen Laser-Scanner gebildet ist.

4. Biegemaschine nach einem der Ansprüche 1 bis 3, **dadurch gekennzeichnet, dass** die beiden Teilabschnitte (19) einen ersten Überlappungsbereich (20) bilden, der einen gemeinsamen Abschnitt des Erfassungsbereichs (10) abdeckt.

5. Biegemaschine nach einem der Ansprüche 1 bis 3, **dadurch gekennzeichnet, dass** das Verhältnis von Normalabstand (31) zwischen der Bilderfassungsvorrichtung und der Längserstreckung (5) des Maschinentisches (4) kleiner 1 beträgt, insbesondere im Bereich von 1 bis 0.25.

6. Biegemaschine nach einem der Ansprüche 1 bis 5, **dadurch gekennzeichnet, dass** der Normalabstand (31) zwischen Bilderfassungsvorrichtung und Maschinentisch (4) 60cm bis 150cm beträgt.

7. Biegemaschine nach einem der Ansprüche 1 bis 6, **dadurch gekennzeichnet, dass** der Öffnungswinkel (28) eines Bilderfassungsmittels (16), parallel zur Arbeitsebene (32), zumindest 60° beträgt, insbesondere 66°.

8. Biegemaschine nach einem der Ansprüche 1 bis 6, **dadurch gekennzeichnet, dass** eine optische Achse (29) des Bilderfassungsmittels (16) in Richtung parallel zur Arbeitsebene (32), um einen Verschwenkwinkel (30) gegenüber dem Normalabstand vom Bilderfassungsmittel (16) auf den Maschinentisch (4) verschwenkt sind.

9. Biegemaschine nach Anspruch 7, **dadurch gekennzeichnet, dass** der Verschwenkwinkel (30) beider Bilderfassungsmittel (16) gleich ist, und 20° bis 30° beträgt, insbesondere 25°.

10. Biegemaschine nach Anspruch 7, **dadurch gekennzeichnet, dass** der Verschwenkwinkel (30) beider Bilderfassungsmittel (16) ungleich ist, und 20° bis 30° und 40° bis 30° beträgt, insbesondere 25° und 35°.

11. Biegemaschine nach einem der Ansprüche 1 bis 10, **dadurch gekennzeichnet, dass** ein Bildsynthesemodul (21) vorhanden ist, mit dem die Kameras der vorderen Bilderfassungsvorrichtung verbunden sind, und welches Bildsynthesemodul (21) zur Erzeugung eines vorderen Gesamtbilds des vorderen Arbeits- und Manipulationsraums (33) ausgebildet ist.

12. Biegemaschine nach einem der Ansprüche 1 bis 11, **dadurch gekennzeichnet, dass** auch im Maschinenraum (34) oberhalb des Maschinentisches (4), in einem Mittenabschnitt der Längserstreckung (9) des Pressebalkens (6) eine weitere Bilderfassungsvorrichtung (35) angeordnet ist, welche zumindest zwei weitere Bilderfassungsmittel (16) aufweist, welche bevorzugt als Kameras ausgebildet sind und dass die Kameras in Richtung eines, im Maschinenraum (34) vorhandenen Hinteranschlag (36) ausgerichtet sind.

13. Biegemaschine nach Anspruch 12, **dadurch gekennzeichnet, dass** ein Bildsynthesemodul (21) vorhanden ist, mit dem die Kameras der hinteren weiteren Bilderfassungsvorrichtung (35) verbunden sind, und welches Bildsynthesemodul (21) zur Erzeugung eines hinteren Gesamtbilds des hinteren Maschinenraums (34) ausgebildet ist.

14. Biegemaschine nach Anspruch 11 und 13, **dadurch gekennzeichnet, dass** das Bildsynthesemodul (21) zur Erzeugung eines Gesamtbilds des vorderen Arbeits- und Manipulationsraums (33) und des hinteren Maschinenraums (34) ausgebildet ist.

15. Biegemaschine nach einem der Ansprüche 11 bis 14, **dadurch gekennzeichnet, dass** ein Bildanalysemodul (23) vorhanden ist, welches mit dem Bildsynthesemodul (21) verbunden ist, und welches Bildanalysemodul (23) zur Erkennung einer Struktur eines zu bearbeitenden Bleches ausgebildet ist.

16. Verfahren zur Darstellung eines Gesamtbilds eines längserstreckten Arbeitsbereichs einer Biegemaschine (1), ausgeführt auf einer Biegemaschine (1) nach einem der Ansprüche 1 bis 15,
wobei von der im Arbeits- und Manipulationsraum (33) angeordneten Bilderfassungsvorrichtung, die zwei Bilderfassungsmittel (16) in Form von Kameras aufweist, ein Bereich entlang des Maschinentisches (4) als vorderer Aufnahmebereich (40) erfasst und als Live-Bild auf einem Anzeigemittel (11) dargestellt wird,
**dadurch gekennzeichnet, dass**
von der ersten Kamera (24) der Bilderfassungsvorrichtung ein erster Abschnitt (25) als erstes Teilbild (38) und von der zweiten Kamera (26) der Bilderfassungsvorrichtung ein zweiter Abschnitt (27) als zweites Teilbild (39) längs des vorderen Aufnahmebereichs (40) erfasst wird, wobei der erste und zweite Abschnitt des vorderen Aufnahmebereichs (40) in einem Teilabschnitt (19) überlappend erfasst wird und einen ersten Überlappungsbereich (20) bildet,
und vom Bildsynthesemodul (21) eine Bildausrichtung und Bildskalierung des ersten (38) und zweiten (39) Teilbilds durchgeführt wird,
und im ersten Überlappungsbereich (20) eine Bildsynthese des ersten (38) und zweiten (39) Teilbilds durchgeführt und das Live-Bild gebildet wird, und dass die Bilderfassungsvorrichtung (2) im Arbeits- und Manipulationsraum (33) oberhalb des Maschinentisches (4), in einem Mittenabschnitt der Längserstreckung (9) des Pressbalkens in einer Pressbalken-Verkleidung (12) angeordnet ist und das Anzeigemittel (11) zur Darstellung des erfassten Abbilds eines Erfassungsbereichs (10) ausgebildet ist und die optischen Zentren der beiden Bilderfassungsmittel (16) im Vergleich zur Längserstreckung (5) des Maschinentisches (4), übereinstimmen, insbesondere mit einer Distanz (18) zueinander von weniger als 10cm ungeordnet sind.

17. Verfahren nach Anspruch 16, **dadurch gekennzeichnet,**
**dass** von der im Maschinenraum (34) angeordneten weiteren Bilderfassungsvorrichtung ein Bereich entlang des Maschinentisches (4) als hinterer Aufnahmebereich (41) erfasst und als Live-Bild auf einem Anzeigemittel (11) dargestellt wird,
**dass** von der ersten Kamera (24) der weiteren Bilderfassungsvorrichtung (35) ein erster Abschnitt (25) als drittes Teilbild (42) und von der zweiten Kamera (26) der weiteren Bilderfassungsvorrichtung (35) ein zweiter Abschnitt (27) als viertes Teilbild (43) längs des hinteren Aufnahmebereichs (41) erfasst wird, wobei der erste (25) und zweite (27) Abschnitt des hinteren Aufnahmebereichs (41) in einem Teilabschnitt (19) überlappend erfasst wird und einen zweiten Überlappungsbereich (44) bildet,
und vom Bildsynthesemodul (21) eine Bildausrichtung und Bildskalierung des dritten (42) und vierten (43) Teilbilds durchgeführt wird,
und im zweiten Überlappungsbereich (44) eine Bildsynthese des dritten (42) und vierten (43) Teilbilds durchgeführt und das Live-Bild gebildet wird.

18. Verfahren nach Anspruch 17, **dadurch gekennzeichnet, dass** der vordere (40) und der hintere (41) Aufnahmebereich überlappend erfasst wird und einen dritten Überlappungsbereich (45) bildet, und im dritten Überlappungsbereich (45) eine Bildsynthese aller vier Teilbilder durchgeführt und das Live-Bild gebildet wird.

19. Verfahren nach einem der Ansprüche 16 bis 18, **dadurch gekennzeichnet, dass** vom Bildsynthesemodul (21) ein hinterlegtes Referenzbild des Werkstücks (46) im Live-Bild am Anzeigemittel (11) dargestellt wird.

20. Verfahren nach einem der Ansprüche 16 bis 19, **dadurch gekennzeichnet, dass** vom Bildanalysemodul (23) mittels einer Musteranalyse im Live-Bild die Ausrichtung eines zu bearbeitenden Werkstücks (46) erkannt wird und durch Vergleich mit einem hinterlegten Referenzbild des Werkstücks (46), eine Transformationsinformation (47) gebildet und im Live-Bild am Anzeigemittel (11) dargestellt wird.

21. Verfahren nach Anspruch 20, **dadurch gekennzeichnet, dass** die Transformationsinformation (47) als Animation erzeugt wird.

22. Verfahren nach einem der Ansprüche 16 bis 21, **dadurch gekennzeichnet, dass** vom Bildanalysemodul (23) über eine Datenverbindung auf ein, in einem Produktionsplanungssystem hinterlegtes Referenzbild des Werkstücks (46) zugegriffen wird,

23. Verfahren nach einem der Ansprüche 16 bis 22, **dadurch gekennzeichnet, dass** vom Bildanalysemodul (23) mittels einer Musteranalyse im Live-Bild eine Kennung eines im Pressbalken (6) und/oder im Maschinentisch (4) angeordneten Biegewerkzeugs ausgelesen und ausgewertet wird.

## Claims

1. A bending machine (1) with a work area image capturing device (2), wherein the bending machine (1) has a machine frame,
a longitudinally extended machine table (4) fixed in place,
and a longitudinally extended press beam (6), which press beam (6) is guided in the machine frame and held by a drive means (7), so as to be movable relative to the latter, and wherein the machine frame furthermore has two side parts (3), which are spaced apart from one another by a machine width in the direction of the longitudinal extension (5) of the machine table (4),
and wherein the longitudinal extension (5) and the direction of movement (8) of the press beam (6) define a working plane (32),
and the working plane (32) establishes a front working and manipulation space (33) and a rear machine space (34), which is distinguished from the former and, in particular, closed off,
and wherein the image capturing device (2) has two image capturing means (16),
and that a capturing region (10) of the image capturing device (2) is oriented in the direction of the machine table (4), and that each image capturing means (16) captures a partial section (19) in the direction of the machine table (4),
and wherein the image capturing device is connected with a display means (11), **characterized in that**
the image capturing device (2) is disposed in the working and manipulation space (33) above the machine table (4), in a center section of the longitudinal extension (9) of the press beam, in a press beam casing (12),
and that the display means (11) is configured for representation of the captured image of the capture region (10), and
the optical centers of the two image capturing means (16) coincide in comparison with the longitudinal extension (5) of the machine table (4), in particular are disposed at a distance (18) from one another of less than 10 cm.

2. The bending machine according to claim 1, **characterized in that** the image capturing means (16) is formed by a 2D camera.

3. The bending machine according to claim 1, **characterized in that** the image capturing means (16) is formed by a laser scanner.

4. The bending machine according to one of claims 1 to 3, **characterized in that** the two partial sections (19) form a first overlap region (20), which covers a common section of the capture region (10).

5. The bending machine according to one of claims 1 to 3, **characterized in that** the ratio of the normal distance (31) between the image capturing device and the longitudinal extension (5) of the machine table (4) amounts to less than 1, in particular in the range from 1 to 0.25.

6. The bending machine according to one of claims 1 to 5, **characterized in that** the normal distance (31) between the image capturing device and the machine table (4) amounts to 60 cm to 150 cm.

7. The bending machine according to one of claims 1 to 6, **characterized in that** the opening angle (28) of an image capturing means (16), parallel to the working plane (32), amounts to at least 60°, in particular 66°.

8. The bending machine according to one of claims 1 to 6, **characterized in that** an optical axis (29) of the image capturing means (16) is pivoted in the direction parallel to the working plane (32), about a pivot angle (30) relative to the normal distance of the image capturing means (16) to the machine table (4).

9. The bending machine according to claim 7, **characterized in that** the pivot angle (30) of the two image capturing means (16) is the same and amounts to 20° to 30°, in particular 25°.

10. The bending machine according to claim 7, **characterized in that** the pivot angle (30) of the two image capturing means (16) is not the same, and amounts to 20° to 30° and 40° to 30°, in particular 25° and 35°.

11. The bending machine according to one of claims 1 to 10, **characterized in that** an image synthesis module (21) is present, with which the cameras of the front image capturing device are connected, and which image synthesis module (21) is configured for generating a front overall image of the front working and manipulation space (33).

12. The bending machine according to one of claims 1 to 11, **characterized in that** a further image capturing device (35) is disposed in the machine space (34) above the machine table (4), in a center section of the longitudinal extension (9) of the press beam (6), which device has at least two further image capturing means (16), which are preferably configured as cameras, and that the cameras are oriented in the direction of a rear stop (36) present in the machine space (34).

13. The bending machine according to claim 12, **characterized in that** an image synthesis module (21) is present, with which the cameras of the rear further image detecting device (35) are connected, and which image synthesis module (21) is configured for generating a rear overall image of the rear machine space (34).

14. The bending machine according to claim 11 and 13, **characterized in that** the image synthesis module (21) is configured for generating an overall image of the front working and manipulation space (33) and of the rear machine space (34).

15. The bending machine according to one of claims 11 to 14, **characterized in that** an image analysis module (23) is present, which is connected with the image synthesis module (21), and which image analysis module (23) is configured for recognition of a structure of a metal sheet to be processed.

16. A method for representation of an overall image of a longitudinally extended work area of a bending machine (1), carried out on a bending machine (1) according to one of claims 1 to 15,
wherein a region along the machine table (4) is captured as a front recording region (40) by the image capturing device, which has two image capturing means (16) in the form of cameras and which is disposed in the working and manipulation space (33), and shown on a display means (11) as a live image,
**characterized in that**
a first section (25) is captured by a first camera (24) of the image capturing device as a first partial image (38), and a second section (27) is captured by the second camera (26) of the image capturing device as a second partial image (39) along the front recording region (40), wherein the first and second section of the front recording region (40) are captured to overlap in a partial section (19), and form a first overlap region (20), and image orientation and image scaling of the first (38) and second (39) partial image are carried out by the image synthesis module (21),
and an image synthesis of the first (38) and second (39) partial image is carried out in the first overlap region (20), and the live image is formed, and that the image capturing device (2) is disposed in the working and manipulation space (33) above the machine table (4), in a center section of the longitudinal extension (9) of the press beam, in a press beam casing (12), and that the display means (11) is configured for representation of the captured image of the capture region (10), and the optical centers of the two image capturing means (16) coincide in comparison with the longitudinal extension (5) of the machine table (4), in particular are disposed at a distance (18) from one another of less than 10 cm.

17. The method according to claim 16, **characterized in that** a region along the machine table (4) is captured as a rear recording region (41) by the further image capturing device disposed in the machine space (34), and displayed on a display means (11) as a live image,
a first section (25) is captured by the first camera (24) of the further image capturing device (35) as a third partial image (42), and a second section (27) along the rear recording region (41) is captured by the second camera (26) of the further image capturing device (35) as a fourth partial image (43), wherein the first (25) and second (27) section of the rear recording region (41) are captured to overlap in a partial section (19), and form a second overlap region (44),
and image orientation and image scaling of the third (42) and fourth (43) partial image are carried out by the image synthesis module (21),
and in the second overlap region (44), image synthesis of the third (42) and fourth (43) partial image is carried out, and the live image is formed.

18. The method according to claim 17, **characterized in that** the front (40) and the rear (41) recording regions are captured to overlap and form a third overlap region (45), and in the third overlap region (45), image synthesis of all four partial images is carried out, and the live image is formed.

19. The method according to one of claims 16 to 18, **characterized in that** a reference image of the workpiece (46), stored in memory by the image synthesis module (21), is shown in the live image on the display means (11).

20. The method according to one of claims 16 to 19, **characterized in that** the orientation of a workpiece (46) to be processed is recognized by the image analysis module (23) by means of a pattern analysis in the live image, and that transformation information (47) is formed by means of a comparison with a stored reference image of the workpiece (46), and shown in the live image on the display means (11).

21. The method according to claim 20, **characterized in that** the transformation information (47) is generated as an animation.

22. The method according to one of claims 16 to 21, **characterized in that** a reference image of the workpiece (46) stored in a production planning system is accessed by the image analysis module (23) by way of a data connection.

23. The method according to one of claims 16 to 22, **characterized in that** an identifier of a bending tool disposed in the press beam (6) and/or in the machine table (4) is read and evaluated by the image analysis module (23), by means of a pattern analysis in the live image.

## Revendications

1. Machine de pliage (1) avec un dispositif de capture d'image de zone de travail (2), dans laquelle la machine de pliage (1) comprend un bâti de machine, une table de machine fixe allongée (4) et une barre de pression (6), cette barre de pression (6) étant guidée dans le bâti de machine et étant logée de manière mobile par rapport à celui-ci par un moyen d'entraînement (7),
et dans laquelle le bâti de machine comprend en outre deux parties latérales (3) qui sont écartées entre elles dans la direction de l'extension longitudinale (5) de la table de machine (4) par une largeur de machine,
et dans laquelle l'extension longitudinale (5) et la direction de déplacement (8) de la barre de pression (6) définissent un plan de travail (32),
le plan de travail (32) détermine un espace de travail et de manipulation avant (33) et un espace de machine arrière (34), limité et plus particulièrement fermé par celui-ci,
et dans laquelle le dispositif de capture d'images (2) comprend deux moyens de capture d'images (16)
et une zone de capture d'images (10) du dispositif de capture d'images (2) est orienté en direction de la table de machine (4) et chaque moyen de capture d'images (16) mesure une section (19) en direction de la table de machine (4),
et dans laquelle le dispositif de capture d'images est relié avec un moyen d'affichage (11),
**caractérisée en ce que**,
le dispositif de capture d'images (2) est disposé dans l'espace de travail et de manipulation (33) au-dessus de la table de machine (4), dans une portion centrale de l'extension longitudinale (9) de la barre de pression dans un carénage de barre de pression (12),
et le moyen d'affichage (11) est conçu pour la représentation de l'image capturée de la zone de capture (10) et
les centres optiques des deux moyens de capture d'images (16), par rapport à l'extension longitudinale (5) de la table de machine (4), coïncident, plus particulièrement sont disposés avec une distance (18) entre eux inférieure à 10 cm.

2. Machine de pliage selon la revendication 1, **caractérisée en ce que** le moyen de capture d'images (16) est constitué d'une caméra 2D.

3. Machine de pliage selon la revendication 1, **caractérisée en ce que** le moyen de capture d'images (16) est constitué d'un scanner à laser.

4. Machine de pliage selon l'une des revendications 1 à 3, **caractérisée en ce que** les deux sections (19) constituent une première zone de chevauchement (20) qui recouvre une portion commune de la zone de capture (10).

5. Machine de pliage selon l'une des revendications 1 à 3, **caractérisée en ce que** le rapport entre la distance normale (31) entre le dispositif de capture d'images et l'extension longitudinale (5) de la table de machine (4) est inférieur à 1, plus particulièrement de 1 à 0,25.

6. Machine de pliage selon l'une des revendications 1 à 5, **caractérisée en ce que** la distance normale (31) entre le dispositif de capture d'images et la table de machine (4) est de 60 cm à 150 cm.

7. Machine de pliage selon l'une des revendications 1 à 6, **caractérisée en ce que** l'angle d'ouverture (28) d'un moyen de capture d'images (16), parallèlement au plan de travail (32), est d'au moins 60°, plus particulièrement de 66°.

8. Machine de pliage selon l'une des revendications 1 à 6, **caractérisée en ce qu'**un axe optique (29) du moyen de capture d'images (16) est pivoté dans une direction parallèle au plan de travail (32) d'un angle de pivotement (30) par rapport à la distance normale du moyen de capture d'images (16) à la table de machine (4).

9. Machine de pliage selon la revendication 7, **caractérisée en ce que** les angles de pivotement (30) des deux moyens de capture d'images (16) sont égaux et sont de 20° à 30°, plus particulièrement de 25°.

10. Machine de pliage selon la revendication 7, **caractérisée en ce que** les angles de pivotement (30) des deux moyens de capture d'images (16) sont différents et sont de 20° à 30° et de 40° à 30°, plus particulièrement de 25° et 35°.

11. Machine de pliage selon l'une des revendications 1 à 10, **caractérisée en ce qu'**un module de synthèse d'images (21) est prévu, avec lequel les caméras du dispositif de capture d'images avant sont reliées et ce module de synthèse d'images (21) étant conçu pour la production d'une image d'ensemble avant de l'espace de travail et de manipulation avant (33).

12. Machine de pliage selon l'une des revendications 1 à 11, **caractérisée en ce que**, également dans l'espace de machine (34), au-dessus de la table de machine (4), dans une portion centrale de l'extension longitudinale (9) de la barre de pression (6), est disposé un dispositif de capture d'images supplémentaire (35) qui comprend au moins deux moyens de capture d'images supplémentaires (16), qui sont conçus de préférence comme des caméras et **en ce que** les caméras sont orientées en direction d'une butée arrière (36) prévue dans l'espace de machine (34).

13. Machine de pliage selon la revendication 12, **caractérisée en ce qu'**un module de synthèse d'images (21) est prévu, avec lequel les caméras du dispositif de capture d'images supplémentaire arrière (35) sont reliées, et module de synthèse d'images (21) étant conçu pour la production d'une image d'ensemble arrière de l'espace de machine arrière (34).

14. Machine de pliage selon la revendication 11 et 13, **caractérisée en ce que** le module de synthèse d'images (21) est conçu pour la production d'une image d'ensemble de l'espace de travail et de manipulation avant (33) et de l'espace de machine arrière (34).

15. Machine de pliage selon l'une des revendications 11 à 14, **caractérisée en ce qu'**un module d'analyse d'images (23) est prévu, qui est relié avec le module de synthèse d'images (21), ce module d'analyse d'images (23) étant conçu pour la détection d'une structure d'une tôle à usiner.

16. Procédé de représentation d'une image d'ensemble d'une zone de travail allongée d'une machine de pliage (1), exécuté sur une machine de pliage (1) selon l'une des revendications 1 à 15,
dans lequel le dispositif de capture d'images disposé dans l'espace de travail et de manipulation (33), qui comprend deux moyens de capture d'images (16) sous la forme de caméras, capture une zone le long de la table de machine (4) en tant que zone de prise de vue avant (40) et la représente en tant qu'image en direct sur un moyen d'affichage (11),
**caractérisé en ce que**
la première caméra (24) du dispositif de capture d'images capture une première portion (25) en tant que première image partielle (38) et la deuxième caméra (26) du dispositif de capture d'images capture une deuxième portion (27) en tant que deuxième image partielle (39) le long de la zone de prise de vue avant (40),
dans lequel les première et deuxième portions de la zone de prise de vue avant (40) sont capturées de façon à se chevaucher dans une section (19) et forment une première zone de chevauchement (20),
et le module de synthèse d'images (21) effectue une orientation d'image et une mise à l'échelle d'image des première (38) et deuxième images partielles (39), et, dans la première zone de chevauchement (20), une synthèse d'images des première (38) et deuxième images partielles (39) est effectuée et l'image en direct est formée et **en ce que** le dispositif de capture d'images (2) est disposé dans l'espace de travail et de manipulation (33) au-dessus de la table de machine (4), dans une portion centrale de l'extension longitudinale (9) de la barre de pression, dans un carénage de barre de pression (12) et le moyen d'affichage (11) est conçu pour la représentation de l'image capturée d'une zone de capture (10) et les centres optiques des deux moyens de capture d'images (16), par rapport à l'extension longitudinale (5) de la table de machine (4), coïncident, plus particulièrement sont disposés avec une distance (18) entre eux inférieure à 10 cm.

17. Procédé selon la revendication 16, **caractérisé en ce que** le dispositif de capture d'images supplémentaire, disposé dans l'espace de machine (34), capture une zone le long de la table de machine (4) en tant que zone de prise de vue arrière (41) et la représente en tant qu'image en direct sur un moyen d'affichage (11), la première caméra (24) du dispositif de capture d'images supplémentaire (35) capture une première portion (25) en tant que troisième image partielle (42) et la deuxième caméra (26) du dispositif de capture d'images supplémentaire (35) capture une deuxième portion (27) en tant que quatrième image partielle (43) le long de la zone de prise de vue arrière (41), dans lequel les première (25) et deuxième portions (27) de la zone de prise de vue arrière (41) sont capturées de façon à se chevaucher dans une section (19) et forment une deuxième zone de chevauchement (44),
et le module de synthèse d'images (21) effectue une orientation d'image et une mise à l'échelle d'image des troisième (42) et quatrième images partielles (43), et, dans la deuxième zone de chevauchement (44), une synthèse d'images des troisième (42) et quatrième images partielles (43) est effectuée et l'image en direct est formée.

18. Procédé selon la revendication 17, **caractérisé en ce que** les zones de prise de vue avant (40) et arrière (41) sont capturées de façon à se chevaucher et forment une troisième zone de chevauchement (45) et, dans la troisième zone de chevauchement (45), une synthèse d'images des quatre images partielles est effectuée et l'image en direct est formée.

19. Procédé selon l'une des revendications 16 à 18, **caractérisé en ce que** le module de synthèse d'images (21) représente une image de référence enregistrée de la pièce (46) dans l'image en direct sur le moyen d'affichage (11).

20. Procédé selon l'une des revendications 16 à 19, **caractérisé en ce que** le module d'analyse d'images (23) détecte, au moyen d'une analyse de motifs, dans l'image en direct, l'orientation d'une pièce (46) à usiner et, grâce à une comparaison avec une image de référence enregistrée de la pièce (46), une information de transformation (47) est générée et est représentée dans l'image en direct sur le moyen d'affichage (11).

21. Procédé selon la revendication 20, **caractérisé en ce que** l'information de transformation (47) est générée sous la forme d'une animation.

22. Procédé selon l'une des revendications 16 à 21, **caractérisé en ce que** le module d'analyse d'images (23) accède, par l'intermédiaire d'une liaison de données, à une image de référence de la pièce (46), enregistrée dans un système de planification de production.

23. Procédé selon l'une des revendications 16 à 22, **caractérisé en ce que** le module d'analyse d'images (23) lit et analyse, au moyen d'une analyse de motifs, dans l'image en direct, un identifiant d'un outil de pliage disposé dans la barre de pression (6) et/ou dans la table de machine (4).
